(19) **Europäisches Patentamt**

**European Patent Office**

**Office européen des brevets**

(11) **EP 1 279 378 A2**

(12) **EUROPÄISCHE PATENTANMELDUNG**

(43) Veröffentlichungstag:
**29.01.2003 Patentblatt 2003/05**

(51) Int Cl.⁷: **A61C 5/02**

(21) Anmeldenummer: **02011476.5**

(22) Anmeldetag: **24.05.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **23.07.2001 DE 10135821**
**23.07.2001 DE 10135820**

(71) Anmelder: **Gebr. Brasseler GmbH & Co. KG**
**D-32657 Lemgo (DE)**

(72) Erfinder:
• **Hagemann, Frank**
**32657 Lemgo (DE)**

• **Otto, Bernd**
**32689 Kalletal (DE)**
• **Küllmer, Michael**
**32657 Lemgo (DE)**
• **Danger, Karl-Heinz**
**32758 Detmold (DE)**

(74) Vertreter: **Weber, Joachim, Dr.**
**Hoefer, Schmitz, Weber & Partner**
**Patentanwälte**
**Gabriel-Max-Strasse 29**
**81545 München (DE)**

(54) **Wurzelkanalinstrumentenset**

(57)    Die Erfindung bezieht sich auf ein Wurzelkanalinstrumentenset mit zumindest zwei Wurzelkanalinstrumenten, wobei jedes Wurzelkanalinstrumt einen Hals 1 mit einem Schaftende 2 an einem Ende und mit einem mit zumindest einer Schneidkante versehenen Arbeitsteil 3 am anderen Ende aufweist, wobei der Arbeitsteil 3 konisch oder ballig ausgebildet ist, dadurch gekennzeichnet, dass die Konuswinkel der Arbeitsteile 3 vom vorhergehenden Wurzelkanalinstrument zum nächsten Wurzelkanalinstrument abnehmen und dass der Arbeitsteil 3 des jeweils vorhergehenden Wurzelkanalinstruments einen größeren Durchmesser aufweist, als der Arbeitsteil 3 des jeweils nachfolgenden Wurzelkanalinstruments, oder dass die Radien der balligen Arbeitsteile 3 vom vorhergehenden Wurzelkanalinstrument zum nächsten Wurzelkanalinstrument zunehmen und dass der Arbeitsteil 3 des jeweils vorhergehenden Wurzelkanalinstruments einen größeren Durchmesser aufweist, als der Arbeitsteil 3 des jeweils nachfolgenden Wurzelkanalinstruments.

Fig. 1

## Beschreibung

Die Erfindung bezieht sich auf ein Wurzelkanalinstrumentenset gemäß dem Oberbegriff des Hauptanspruchs.

Zur Bearbeitung und Aufbereitung von Wurzelkanälen wurden im Stand der Technik die unterschiedlichsten Werkzeuge vorgeschlagen. Insgesamt ergeben sich zwei unterschiedliche Ausgestaltungsformen, die der jeweiligen Bearbeitungs-Abfolge entsprechen: Die einen Werkzeugsätze beginnen mit einem relativ dünnen Werkzeug, das jeweils nachfolgende Wurzelkanalinstrument weist einen dickeren Durchmesser auf. Der Wurzelkanal wird somit schrittweise zu seinem freien Ende hin in seinem Durchmesser erweitert. Die andere Vorgehensweise, die auch als Crown-down-Präparation bezeichnet wird, beginnt mit einem Instrument größeren Durchmessers, durch welches der obere, äußere Bereich des Wurzelkanals bearbeitet wird. Die nachfolgenden Instrumente nehmen in ihrem Durchmesser ab und gestatten eine weiter gehende, tiefergehende Bearbeitung des Wurzelkanals.

Die vorliegende Erfindung bezieht sich auf ein Wurzelkanalinstrumentenset für die Crown-down-Präparation.

Viele aus dem Stand der Technik bekannten Wurzelkanalinstrumente weisen den Nachteil auf, dass sie nicht zu optimalen Präparationsergebnissen führen, dass eine erhebliche Bruchgefahr besteht und dass es nicht möglich ist, dem natürlichen Verlauf des Wurzelkanals entsprechend zu folgen.

Der Erfindung liegt die Aufgabe zugrunde, ein Wurzelkanalinstrumentenset der eingangs genannten Art zu schaffen, welches bei einfachem Aufbau und einfacher, kostengünstiger Herstellbarkeit sicher anwendbar ist und ein hervorragendes Präparationsergebnis liefert.

Erfindungsgemäß wird die Aufgabe durch die Merkmale des Hauptanspruchs gelöst, die Unteransprüche zeigen weitere vorteilhafte Ausgestaltungen der Erfindung.

Erfindungsgemäß ist somit vorgesehen, dass die Konuswinkel der Arbeitsteile vom vorhergehenden Wurzelkanalinstrument zum nächsten Wurzelkanalinstrument abnehmen, wobei das Arbeitsteil des jeweils vorhergehenden Wurzelkanalinstruments einen größeren Durchmesser aufweist als das Arbeitsteil des jeweils nachfolgenden Wurzelkanalinstrument.

Erfindungsgemäß ist alternativ vorgesehen, dass die Radien der balligen Arbeitsteile vom vorhergehenden Wurzelkanalinstrument zum nächsten Wurzelkanalinstrument zunehmen, und dass das Arbeitsteil des jeweils vorhergehenden Wurzelkanalinstruments einen größeren Durchmesser aufweist als das Arbeitsteil des jeweils nachfolgenden Wurzelkanalinstrument, wobei die Arbeitsteillänge gleich groß ist.

Es handelt sich bei der erfindungsgemäßen Ausgestaltung somit um ein Set von Wurzelkanalinstrumenten. Erfindungsgemäß ist somit vorgesehen, dass nicht nur der Durchmesser der Instrumente abnimmt, sondern auch deren Konuswinkel. Hierdurch ist es möglich, mit dem nachfolgenden Instrument jeweils in die konusförmige, von dem vorhergehenden Instrument erzeugte Ausnehmung einzudringen und die Präparationstiefe des Wurzelkanals auf diese Art und Weise zu erhöhen.

Erfindungsgemäß ist somit auch vorgesehen, dass einerseits der Durchmesser der Instrumente abnimmt, und andererseits der Radius des balligen Arbeitsteils zunimmt. Hierdurch ist es möglich, mit dem nachfolgenden Instrument jeweils in die von dem vorhergehenden Instrument erzeugte Ausnehmung einzudringen und die Präparationstiefe des Wurzelkanals auf diese Art und Weise zu erhöhen.

Durch die erfindungsgemäß gewählte Ausgestaltungsform ergibt sich eine verkürzte Länge des jeweiligen Arbeitsteils, welche zu einem verbesserten Biegebruchverhalten, verglichen mit den aus dem Stand der Technik bekannten Standardinstrumenten, führt.

Erfindungsgemäß ist vorgesehen, dass die Arbeitslänge des jeweils vorhergehenden Wurzelkanalinstruments kleiner ist als die Arbeitslänge des jeweils nachfolgenden Wurzelkanalinstruments. Unter Anwendung der erfindungsgemäßen Wurzelkanalinstrumente ergibt sich so ein konisch-segmentiert bzw. segmentiert aufbereiteter Wurzelkanal.

Erfindungsgemäß kann die Ausgestaltung des Arbeitsteils in unterschiedlicher Art und Weise erfolgen. Es ist besonders vorteilhaft, wenn der Arbeitsteil mit einer schraubenlinienförmigen Kante versehen ist. Der Arbeitsteil kann als Zwei-Schneider oder als Drei-Schneider ausgebildet sein. Dies bedeutet, dass eine, zwei oder drei Schneiden vorgesehen sein können.

Um eine einfache Handhabung der einzelnen Wurzelkanalinstrumente sicherzustellen und um die jeweilige Arbeitstiefe in optimaler Weise gewährleisten zu können, ist es besonders vorteilhaft, dass die sich aus der Länge des Halses/Halsbereiches plus der Länge des Arbeitsteils ergebende Arbeitslänge des Wurzelkanalinstruments vom jeweils vorhergehenden Wurzelkanalinstrument zum jeweils nachfolgenden Wurzelkanalinstrument zunimmt. Der zur Handhabung dienende Schaftteil/Schaft des Wurzelkanalinstruments wird somit jeweils bis zu einem gleichen Maß in den Antrieb eingeführt, die unterschiedliche Arbeitstiefe ergibt sich automatisch durch die unterschiedliche Länge des Wurzelkanalinstruments.

Erfindungsgemäß ist, wie bereits erwähnt, vorgesehen, dass nicht nur die Längen der Wurzelkanalinstrumente innerhalb des Sets zunehmen, sondern sich auch die Durchmesser (und die Konizitäten) der Arbeitsteile entsprechend verringern.

Durch die zunehmenden Radien der balligen Bereiche der Arbeitsteile ergibt sich insgesamt eine schlankere Form des jeweils folgenden Wurzelkanalinstruments bzw. dessen Arbeitsteils.

Um eine schrittweise Präparation zu gewährleisten, ist es dabei besonders vorteilhaft, wenn der Durchmesser des Arbeitsteils des jeweils vorangehenden Wurzelkanalinstruments in einen kleineren Abstand von dem distalen Ende des Arbeitsteils gleich ist dem Durchmesser des Arbeitsteils des nachfolgenden Wurzelkanalinstruments in einem größeren Abstand vom distalen Ende von dessen Arbeitsteil. Dies bedeutet, dass die Wurzelkanalinstrumente jeweils an bestimmten Stellen gleiche Durchmesser aufweisen, wobei diese Stellen gleichen Durchmessers einen unterschiedlichen Abstand vom distalen Ende des Arbeitsteils haben, so dass das nachfolgende Wurzelkanalinstrument entsprechend tiefer in den Wurzelkanal eingebracht werden kann, bis es den Bereich des bereits bearbeiteten Wurzelkanals des vorangegangenen Instruments erreicht. Hieraus ergibt sich, dass der durch das vorangehende Instrument bearbeitete konische Bereich des Wurzelkanals von dem nachfolgenden Instrument nicht oder nur gerinfügigst nochmals bearbeitet wird. Die erforderliche Krafteinbringung ist somit weitaus geringer. Hierdurch verringert sich die Reibung, als Folge wird die Belastung des Wurzelkanalinstruments vermindert, so dass insgesamt auch die Bruchgefahr erheblich reduziert werden kann.

Um eine standardmäßige Bearbeitung bzw. ein standardisiertes Arbeitsergebnis zu erhalten, ist erfindungsgemäß vorgesehen, dass der Konuswinkel bzw. der Durchmesser des zuletzt verwendeten Instruments des Wurzelkanalinstrumentensets nach ISO ausgebildet ist.

Bei der oben beschriebenen Ausgestaltung der einzelnen Radien bzw. Konuswinkel der Arbeitsteile und der wirksamen Längen der Arbeitsteile ist es in einer günstigen Weiterbildung der Erfindung vorteilhaft, wenn der Arbeitsteil des zweiten Wurzelkanalinstruments und jedes folgenden Wurzelkanalinstruments nur über einen von dem distalen Ende des Arbeitsteils beginnenden Bereich an seiner Schneidkante scharf geschliffen ausgebildet ist. Der sich an den scharf geschliffenen Bereich anschließende Bereich ist somit bevorzugterweise nicht-schneidend ausgebildet. Er kann beispielsweise so ausgestaltet sein, dass er lediglich schabend wirkt und zu einer weiteren Glättung des Wurzelkanals führt. Bei dem ersten Wurzelkanalinstrument ist es vorteilhaft, wenn dieses über seine gesamte Länge scharf geschliffen ausgebildet ist.

Der Durchmesser des Arbeitsteils eines jeweils nachfolgenden Wurzelkanalinstruments ist im Übergang vom scharf geschliffenen Bereich zum nicht-schneidenden Bereich im Wesentlichen gleich zu dem Durchmesser des distalen Endes des Arbeitsteils des vorangehenden Wurzelkanalinstruments. Auch hierdurch wird eine stufenweise Bearbeitung der Wurzelkanäle sichergestellt. Insbesondere wird hierdurch verhindert, dass das nachfolgende Instrument über einen unnötig großen Bereich schneidend im Einsatz sein muss.

Der schneidende Bereich ist vielmehr exakt auf den zu bearbeitenden unteren Teil des Wurzelkanals abgestimmt.

Besonders günstig ist es, wenn der Hals des jeweiligen Wurzelkanalinstruments mit einem gegebenenfalls erhabenen Markierungsring versehen ist. Dieser gestattet es dem Zahnarzt, die Eindringtiefe zu überwachen und zu kontrollieren. Der Markierungsring kann beispielsweise mit einem erhabenen Durchmesser versehen sein, der größer ist als der Halsdurchmesser. Hierdurch wird die Flexibilität des Wurzelkanalinstruments, welche durch einen relativ dünnen Hals gegeben ist, nicht beeinträchtigt.

Die erfindungsgemäßen Wurzelkanalinstrumente können aus nicht rostendem Federstahl oder einer superelastischen Nickel-Titan-Legierung gefertigt sein. Es ist auch möglich, diese zusätzlich mit einer Hartbeschichtung zu versehen.

Besonders günstig ist es, wenn die Wurzelkanalinstrumente einstückig ausgebildet sind.

Im Folgenden wird die Erfindung anhand von Ausführungsbeispielen anhand der Zeichnungen beschrieben. Dabei zeigt:

Fig. 1      eine Seitenansicht eines ersten Ausführungsbeispiels eines erfindungsgemäßen Sets von drei Wurzelkanalinstrumenten,

Fig. 2      eine vergrößerte Ansicht des jeweiligen Arbeitsteils der in Fig. 1 gezeigten Instrumente,

Fig. 3      eine Seitenansicht einer weiteren Variante des ersten Ausführungsbeispiels eines Wurzelkanalinstruments mit Markierungsringen,

Fig. 4      eine vereinfachte Schnittansicht durch die Arbeitsteile der drei Wurzelkanalinstrumente des Sets zur Darstellung der unterschiedlichen Schneidengeometrie,

Fig. 5      eine Seitenansicht eines zweiten Ausführungsbeispiels eines erfindungsgemäßen Sets von drei Wurzelkanalinstrumenten,

Fig. 6      eine vergrößerte Ansicht des jeweiligen Arbeitsteils der in Fig. 5 gezeigten Instrumente,

Fig. 7      eine Seitenansicht einer weiteren Variante des zweiten Ausführungsbeispiels eines Wurzelkanalinstruments mit Markierungsringen, und

Fig. 8      eine vereinfachte Schnittansicht durch die Arbeitsteile der drei Wurzelkanalinstrumente des Sets zur Darstellung der unterschiedlichen Schneidengeometrie.

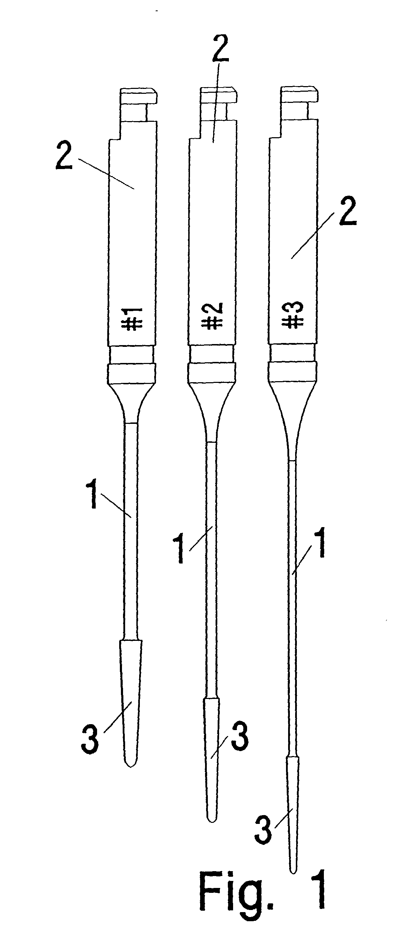

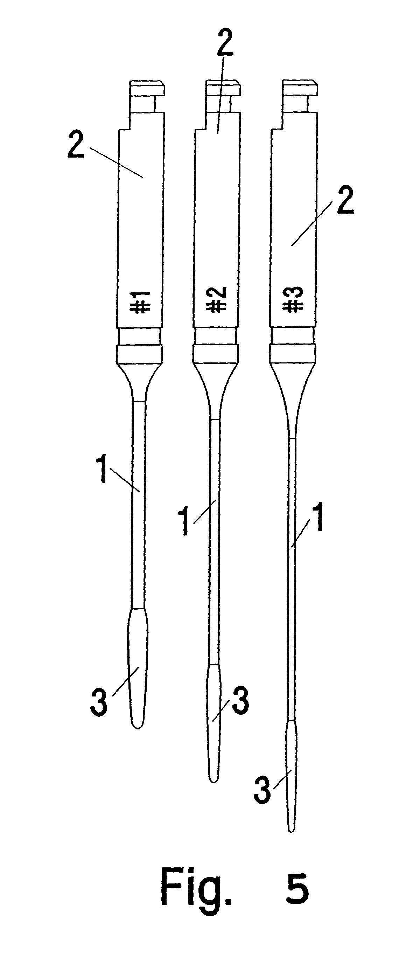

Die in Fig. 1 bzw. Fig. 5 gezeigten Wurzelkanalinstrumente weisen jeweils einen dünnen, elastischen Hals/Halsbereich 1 auf, an dessen vorderem Ende ein Arbeitsteil 3 vorgesehen ist, welches konisch ausgebildet ist. Das andere Ende des Schaftes ist einstückig mit einem Schaftende/Schaft 2 verbunden. Die Wurzelkanalinstrumente sind zum maschinellen Antrieb geeignet, das Schaftende ist deshalb entsprechend ausgebildet. Auf eine detaillierte Beschreibung kann an dieser Stelle verzichtet werden, da die Ausgestaltung aus dem Stand der Technik bekannt ist.

Das Set von Wurzelkanalinstrumenten ist speziell für die apikale Wurzelkanal-Aufbereitung ausgebildet. Daher ist die maximale Aufbereitungslänge aller verwendeten Instrumente ungefähr 12 mm. Im Hinblick auf die anzuwendende Crown-down-Technik nehmen die Größen bzw. die Durchmesser der einzelnen Instrumente ab. Das Set umfasst erfindungsgemäß zwei Instrumente abnehmender Größe, günstiger ist es jedoch, wenn, wie gezeigt, drei Instrumente vorgesehen sind.

Erfindungsgemäß können die Arbeitslängen der einzelnen Instrumente des Sets voneinander um 1 bis 10 mm variieren. Die Arbeitslängen ergeben sich aus der Länge des Arbeitsteils 3 und des Halses 1.

Die Länge des Arbeitsteils 3 der einzelnen Instrumente kann in einem Bereich von 3 bis 10 mm variieren.

Der Öffnungswinkel des Konus des ersten Instruments (Nr. 1) liegt beispielsweise zwischen 2° und 12°. Wie bereits beschrieben, ist der Öffnungswinkel des jeweils nachfolgenden Instruments jeweils kleiner gewählt.

Die erfindungsgemäßen Wurzelkanalinstrumente des zweiten Ausführungsbeispiels (Fig. 5 bis Fig. 8) haben somit ballige oder flammförmige Arbeitsteile 3. Diese weisen an ihren Spitzen jeweils Durchmesser $d1.1$, $d1.2$ bzw. $d1.3$ auf, welche den genormten ISO-Werten entsprechen.

Die vordere Spitze (Kuppe) ist üblicherweise nicht-schneidend ausgebildet, sie dient zur Führung und kann entweder als Kegelstumpf oder als Halbkugel ausgestaltet sein.

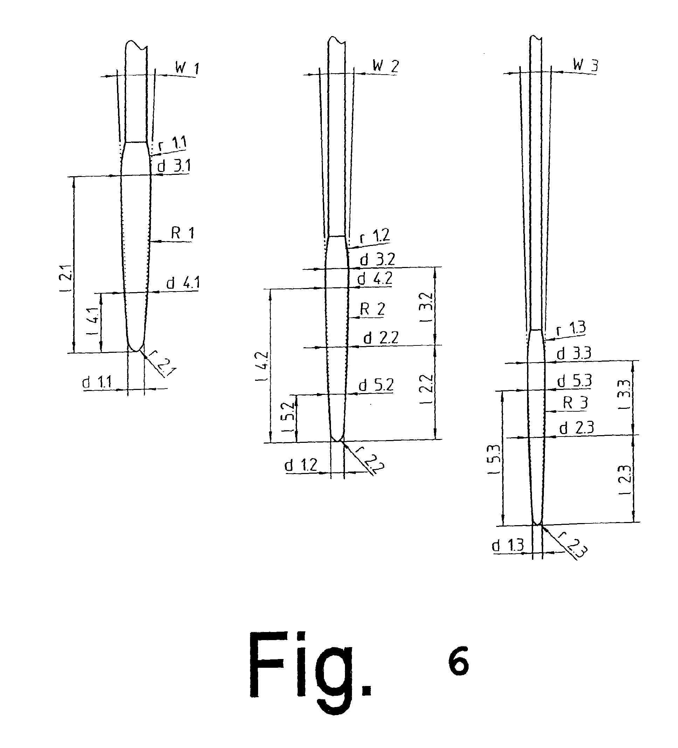

Der Radius der vorderen Spitze kann beispielsweise beim Instrument Nr. 1 0,445 mm betragen, beim Instrument Nr. 2 0,325 mm und beim Instrument Nr. 3 0,274 (siehe Radien $r2.1$, $r2.2$ und $r2.3$ in Fig. 6).

Die balligen Bereiche der jeweiligen Arbeitsteile 3 weisen jeweils einen Radius $R1$, $R2$ und $R3$ auf. Diese Radien können beispielsweise beim Instrument Nr. 1 62,6, beim Instrument Nr. 2 83,4 und beim Instrument Nr. 3 98,1 mm betragen.

Der mit den oben beschriebenen Radien ausgebildete Arbeitsteil 3 geht über einen abgeschrägten oder mit einem Radius $r1.1$, $r1.2$ bzw. $r1.3$ in den Schaft 1 über. Diese Radien können beispielsweise 4,0 mm, 6,7 mm und 5,6 mm betragen.

Aus der Darstellung der Fig. 6 ergibt sich weiterhin ein überlagerter Konuswinkel (theoretischer Winkel), der jeweils an Linien gemessen wurde, die beim Spitzendurchmesser $d1.1$, $d1.2$ bzw. $d1.3$ sowie am größten Durchmesser $d3.1$, $d3.2$ und $d3.3$ angelegt wurden. Hierbei ergibt sich für das Instrument Nr. 1 ein theoretischer Winkel von $W1 = 4,58°$, für das Instrument Nr. 2 ein theoretischer Winkel von $W2 = 3,32°$ und für das Instrument Nr. 3 ein theoretischer Winkel von $W3 = 2,77°$.

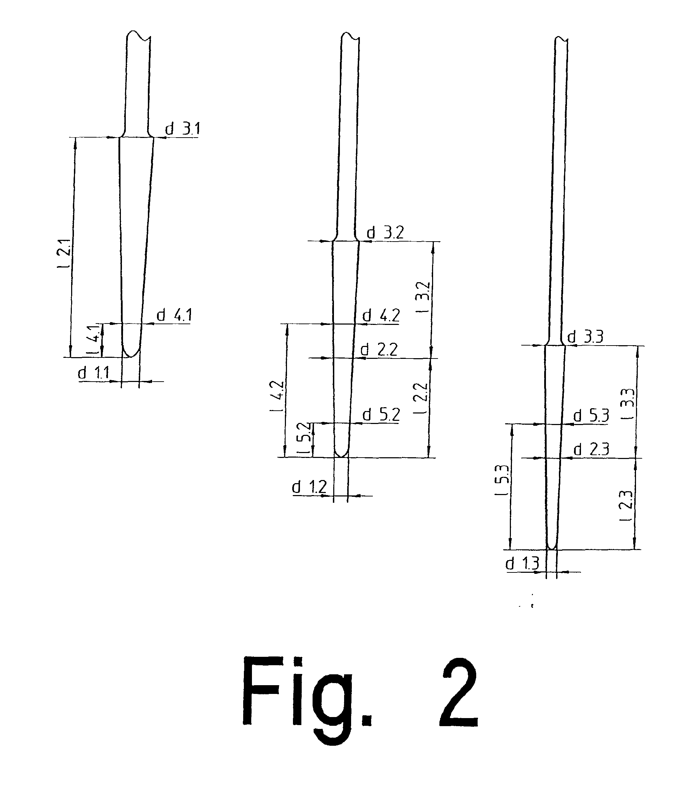

Wie in den Zeichnungen (Fig. 2 bzw. Fig. 6) dargestellt, ergibt sich somit ein abnehmender Durchmesser des Arbeitsteils 3, so dass sich folgende Zuordnung ergibt:

$$d3.1 > d3.2 > d3.3$$

In den Zeichnungen bezeichnet die zweite Zahl der Durchmesser bzw. der Längenangaben jeweils die Nummer des verwendeten Instruments.

Es ergibt sich weiterhin eine Zuordnung der scharfen, schneidend ausgebildeten Bereiche des Arbeitsteils 3 zu den nicht-schneidenden, schabend ausgebildeten Bereichen des Arbeitsteils, welche in den Zeichnungen entsprechend dargestellt ist. Hierbei ergibt sich, dass

$$d1.1 = d2.2$$

und

$$d1.2 = d2.3.$$

Weiterhin ergibt sich folgende Zuordnung:

$$d4.1 = d4.2$$

und

$$d5.2 = d5.3.$$

Die beiden erstgenannten Gleichungen ergeben einen Hinweis auf die Zuordnung des Durchmessers zum scharfen, schneidenden Bereich des Arbeitsteils 3, während die beiden letztgenannten Gleichungen eine Zuordnung des Durchmessers zum Öffnungswinkel des Konus bzw. des balligen Bereichs geben.

Das erste Instrument ist über seine gesamte Länge 12.1 scharf schneidend ausgebildet. Bei den beiden nachfolgenden Instrumenten ist der scharf schneidende Bereich jeweils mit 12.2 und 12.3 gekennzeichnet, während der schabende Bereich mit 13.2 und 13.3 angegeben ist.

Hinsichtlich der Zuordnung des Öffnungswinkels und des angegebenen Durchmessers ist in den Figuren verdeutlicht, dass bei dem ersten Instrument in einem Abstand 14.1 vom distalen Ende ein Durchmesser d4.1 vorgesehen ist, der gleich ist einem Durchmesser d4.2 des zweiten Instruments in einem Abstand 14.2 von dessen distalem Ende. In gleicher Weise weist das zweite Instrument in einem Abstand 15.2 vom distalen Ende einen Durchmesser d5.2 auf, welcher gleich einem Durchmesser d5.3 des dritten Instruments in einem Abstand 15.3 von dessen distalem Ende ist.

Wie bereits erwähnt, ist der Arbeitsteil 3 des ersten Instruments über seine gesamte Länge 12.1 scharf geschliffen, während die scharfen, schneidenden Bereiche der Instrumente Nr. 2 und Nr. 3 jeweils durch die Länge 12.2 bzw. 12.3 angegeben sind. Die Längen 13.2 und 13.3 sind jeweils schabend ausgebildet. Die Durchmesser d2.2 bzw. d2.3, bei welchen der Übergang vom schneidenden Bereich zum schabenden Bereich erfolgt, ist jeweils gleich dem Durchmesser am distalen Ende des vorhergehenden Instruments d1.1 bzw. d1.2.

Die Biegsamkeit sämtlicher Wurzelkanalinstrumente wird durch die Ausgestaltung und Dimensionierung des Halses 1 gewährleistet.

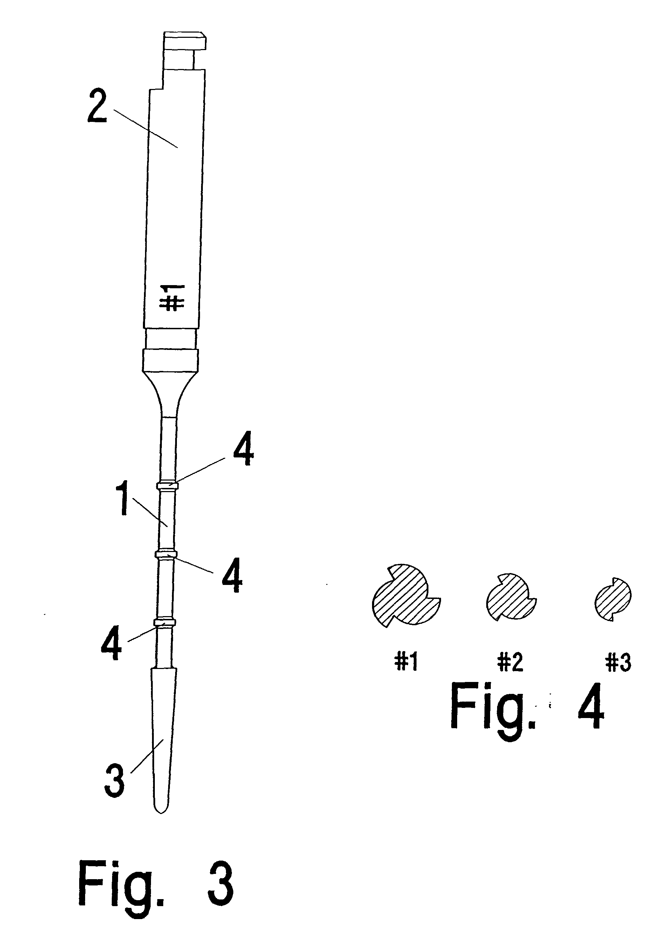

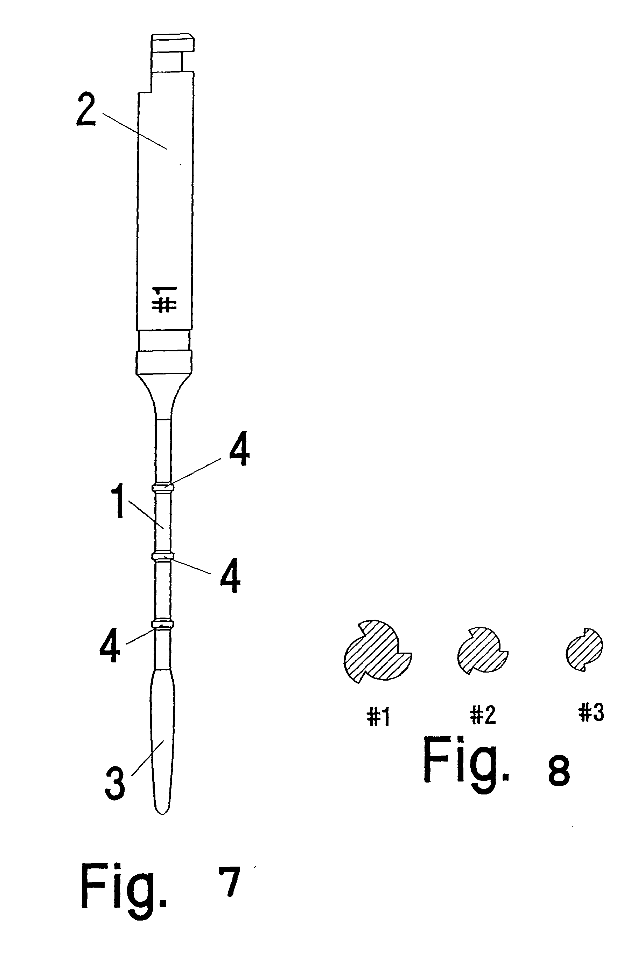

Die Fig. 3 bzw. die Fig. 7 zeigt ein Ausführungsbeispiel, bei welchem erhabene Markierungsringe 4 vorgesehen sind, um die Eindringtiefe zu kontrollieren. Die Markierungsringe beeinträchtigen nicht die Biegsamkeit des Halses 1.

Die Fig. 4 bzw. Fig. 8 zeigt drei Schnittansichten durch den jeweils schneidenden Teil des Arbeitsbereichs 3. Hierbei ist zu sehen, dass die Instrumente Nr. 1 und Nr. 2 jeweils drei Schneiden aufweisen, während das Instrument Nr. 3 als zweischneidiges Instrument ausgestaltet ist.

Es versteht sich, dass im Rahmen der Erfindung die Dimensionierung der einzelnen Sets sowie der Instrumente innerhalb eines Sets variiert werden kann. So sind Sets mit insgesamt größeren Arbeitsdurchmesser sowie Sets mit insgesamt kleinerem Arbeitsdurchmesser möglich.

Erfindungsgemäß ist es auch möglich, die einzelnen Sets zu kombinieren, so dass diese sowohl ballige als auch konische Instrumente umfassen. Hierdurch ist eine besonders gute Anpassung an unterschiedlichsten Arbeitsbedingungen und Situationen möglich.

Die Erfindung ist nicht auf die gezeigten Ausführungsbeispiele beschränkt. Vielmehr ergeben sich im Rahmen der Erfindung vielfältige Abwandlungs- und Modifikationsmöglichkeiten.

## Patentansprüche

1. Wurzelkanalinstrumentenset mit zumindest zwei Wurzelkanalinstrumenten, wobei jedes Wurzelkanalinstrumt einen Hals (1) mit einem Schaftende (2) an einem Ende und mit einem mit zumindest einer Schneidkante versehenen Arbeitsteil (3) am anderen Ende aufweist, wobei der Arbeitsteil (3) konisch ausgebildet ist, **dadurch gekennzeichnet, dass** die Konuswinkel der Arbeitsteile vom vorhergehenden Wurzelkanalinstrument zum nächsten Wurzelkanalinstrument abnehmen und dass das Arbeitsteil (3) des jeweils vorhergehenden Wurzelkanalinstruments einen größeren Durchmesser aufweist, als das Arbeitsteil des jeweils nachfolgenden Wurzelkanalinstruments (d3.1>d3.2>d3.3).

2. Set nach Anspruch 1, **dadurch gekennzeichnet, dass** die Arbeitslänge (3) des jeweils vorhergehenden Wurzelkanalinstruments kleiner ist, als die Arbeitslänge (3) des jeweils nachfolgenden Wurzelkanalinstruments.

3. Set nach Anspruch 1 oder 2, **dadurch gekennzeichnet, dass** das Arbeitsteil (3) konisch verzahnt ist.

4. Set nach Anspruch 3, **dadurch gekennzeichnet, dass** das Arbeitsteil (3) zumindest eine schraubenlinienförmige Schneidkante aufweist.

5. Set nach einem der Ansprüche 1 bis 4, **dadurch gekennzeichnet, dass** der Durchmesser (d4.1 bzw. d5.2) des Arbeitsteils (3) des jeweils vorangehenden Wurzelkanalinstruments in einem kleineren Abstand (14.1 bzw. 15.2) von dem distalen Ende des Arbeitsteils (3) gleich ist dem Durchmesser (d4.2 bzw. d5.3) des Arbeitsteils (3) des jeweils nachfolgenden Wurzelkanalinstruments in einem größeren Abstand (14.2 bzw. 15.3) vom distalen Ende von dessen Arbeitsteil (3).

6. Set nach einem der Ansprüche 1 bis 5, **dadurch gekennzeichnet, dass** der Konuswinkel beziehungsweise der Durchmesser des zuletzt verwendeten Instruments nach ISO ausgebildet ist.

7. Set nach einem der Ansprüche 1 bis 6, **dadurch gekennzeichnet, dass** das Arbeitsteil (3) des zweiten Wurzelkanalinstruments und jedes folgenden Wurzelkanalinstruments nur über einen von dem distalen Ende des Arbeitsteils (3) beginnenden Bereich (bis 12.2 bzw. 12.3) an seiner Schneidkante scharf geschliffen ausgebildet ist.

8. Set nach Anspruch 7, **dadurch gekennzeichnet, dass** der sich an den scharf geschliffenen Bereich anschließende Bereich nicht-schneidend ausgebildet ist (13.2 bzw. 13.3).

9. Set nach Anspruch 8, **dadurch gekennzeichnet, dass** der nicht-schneidende Bereich schabend ausgebildet ist.

10. Set nach einem der Ansprüche 7 bis 9, **dadurch gekennzeichnet, dass** der Arbeitsteil (3) des ersten Wurzelkanalinstruments über seine gesamte Länge scharf geschliffen ausgebildet ist.

11. Set nach einem der Ansprüche 7 bis 10, **dadurch gekennzeichnet, dass** der Durchmesser (d2.2 bzw. d2.3) des Arbeitsteils (3) eines jeweils nachfolgenden Wurzelkanalinstruments im Übergang vom scharf geschliffenen Bereich zum nicht-schneidenden Bereich im Wesentlichen gleich ist zum Durchmesser (d1.1 bzw. d1.2) des distalen Endes des Arbeitsteils (3) des vorangehenden Wurzelkanalinstruments.

12. Set nach einem der Ansprüche 1 bis 11, **dadurch gekennzeichnet, dass** der Hals (1) mit zumindest einem Markierungsring (4) versehen ist.

13. Set nach Anspruch 12, **dadurch gekennzeichnet, dass** der Markierungsring (4) einen Durchmesser aufweist, der größer ist, als der Durchmesser des Halses (1).

14. Set nach einem der Ansprüche 1 bis 13, **dadurch gekennzeichnet, dass** das Wurzelkanalinstrument einstückig ausgebildet ist.

15. Wurzelkanalinstrumentenset mit zumindest zwei Wurzelkanalinstrumenten, wobei jedes Wurzelkanalinstrumt einen Hals (1) mit einem Schaftende (2) an einem Ende und mit einem mit zumindest einer Schneidkante versehenen Arbeitsteil (3) am anderen Ende aufweist, wobei der Arbeitsteil (3) ballig ausgebildet ist, **dadurch gekennzeichnet, dass** die Radien der balligen Arbeitsteile (3) vom vorhergehenden Wurzelkanalinstrument zum nächsten Wurzelkanalinstrument zunehmen und dass das Arbeitsteil (3) des jeweils vorhergehenden Wurzelkanalinstruments einen größeren Durchmesser aufweist, als das Arbeitsteil des jeweils nachfolgenden Wurzelkanalinstruments (d3.1>d3.2>d3.3).

16. Set nach Anspruch 15, **dadurch gekennzeichnet, dass** die Arbeitslänge (3) des jeweils vorhergehenden Wurzelkanalinstruments kleiner ist, als die Arbeitslänge (3) des jeweils nachfolgenden Wurzelkanalinstruments.

17. Set nach Anspruch 15 oder 16, **dadurch gekennzeichnet, dass** das Arbeitsteil (3) verzahnt ist.

18. Set nach Anspruch 17, **dadurch gekennzeichnet, dass** das Arbeitsteil (3) zumindest eine schraubenlinienförmige Schneidkante aufweist.

19. Set nach einem der Ansprüche 15 bis 18, **dadurch gekennzeichnet, dass** der Durchmesser (d4.1 bzw. d5.2) des Arbeitsteils (3) des jeweils vorangehenden Wurzelkanalinstruments in einem kleineren Abstand (14.1 bzw. 15.2) von dem distalen Ende des Arbeitsteils (3) gleich ist dem Durchmesser (d4.2 bzw. d5.3) des Arbeitsteils (3) des jeweils nachfolgenden Wurzelkanalinstruments in einem größeren Abstand (14.2 bzw. 15.3) vom distalen Ende von dessen Arbeitsteil (3).

20. Set nach einem der Ansprüche 15 bis 19, **dadurch gekennzeichnet, dass** das Arbeitsteil (3) des zweiten Wurzelkanalinstruments und jedes folgenden Wurzelkanalinstruments nur über einen von dem distalen Ende des Arbeitsteils (3) beginnenden Bereich (bis 12.2 bzw. 12.3) an seiner Schneidkante scharf geschliffen ausgebildet ist.

21. Set nach Anspruch 20, **dadurch gekennzeichnet, dass** der sich an den scharf geschliffenen Bereich anschließende Bereich nicht-schneidend ausgebildet ist (13.2 bzw. 13.3).

22. Set nach Anspruch 21, **dadurch gekennzeichnet, dass** der nicht-schneidende Bereich schabend ausgebildet ist.

23. Set nach einem der Ansprüche 20 bis 22, **dadurch gekennzeichnet, dass** der Arbeitsteil (3) des ersten Wurzelkanalinstruments über seine gesamte Länge scharf geschliffen ausgebildet ist.

24. Set nach einem der Ansprüche 20 bis 23, **dadurch gekennzeichnet, dass** der Durchmesser (d2.2 bzw. d2.3) des Arbeitsteils (3) eines jeweils nachfolgenden Wurzelkanalinstruments im Übergang vom scharf geschliffenen Bereich zum nicht-schneidenden Bereich im Wesentlichen gleich ist zum Durchmesser (d1.1 bzw. d1.2) des distalen Endes des Arbeitsteils (3) des vorangehenden Wurzelkanalinstruments.

25. Set nach einem der Ansprüche 15 bis 24, **dadurch gekennzeichnet, dass** der Hals (1) mit zumindest einem Markierungsring (4) versehen ist.

26. Set nach Anspruch 25, **dadurch gekennzeichnet, dass** der Markierungsring (4) einen Durchmesser aufweist, der größer ist, als der Durchmesser des Halses (1).

27. Set nach einem der Ansprüche 15 bis 26, **dadurch gekennzeichnet, dass** das Wurzelkanalinstrument einstückig ausgebildet ist.

28. Set nach einem der Ansprüche 1 bis 27, **dadurch gekennzeichnet, dass** das Set eine Kombination von balligen und konischen Wurzelkanalinstrumenten umfasst.

Fig. 1

d 3.1

l 2.1

d 4.1

l 4.1

d 1.1

d 3.2

l 3.2

d 4.2

d 2.2

l 4.2

l 2.2

d 5.2

l 5.2

d 1.2

d 3.3

l 3.3

d 5.3

l 5.3

d 2.3

l 2.3

d 1.3

# Fig. 2

Fig. 3

Fig. 4

Fig. 5

# Fig. 6

Fig. 7

#1    #2    #3

Fig. 8